# EUROPEAN PATENT APPLICATION

(11) **EP 2 249 499 A1**
(43) Date of publication of application: **10.11.2010**
(21) Application number: 09305396.5
(22) Date of filing: 04.05.2009
(51) Int. Cl.: H04J 14/02, H04J 3/06, H04J 3/12, H04J 3/14

(54) **Method for protecting a type b passive optical network (pon) and preparing an access control take over by a protection optical line termination (olt) with fast ranging**

(71) Applicant: Mitsubishi Electric R&D Centre Europe B.V., 1119 NS Schiphol Rijk (NL); Mitsubishi Electric Corporation, Tokyo 100-8310 (JP)
(72) Inventor: Lavilloniere, Eric, 35530, Noyal Sur Vilaine (FR); Weppe, Olivier, 35690, Acigne (FR)
(74) Representative: Jacobson, Claude

(57) **Abstract**

The method for protecting a type B Passive Optical Network (PON) comprises preparation step for preparing an access control by a protection Optical Line Termination (OLT).
The preparation step comprises the steps of:
sending a ranging enabling message defining a ranging gap by a gap delay and a gap duration, the gap delay being the time to wait upon reception of the signalling ranging enabling message to range one single predetermined Optical Network Unit (ONU1) by the protection Optical Line Termination (OLT1),
sending from the currently working Optical Line Termination (OLT0) to the protection Optical Line Termination (OLT1) signalling messages containing the ranging information of each Optical Network Unit (8,10,12) relative to the currently working Optical Line Termination (OLT0),
ranging the predetermined Optical Network Unit (ONU1) by the protection Optical Line Termination (OLT1) during the ranging gap while keeping the currently working Optical Network Unit (OLT0) and the remaining Optical Network Units (ONU0, ONU2) silent,
determining the ranging information of each Optical Network Unit relative to the protection Optical Network Unit (OLT1) from the ranging information of each Optical Network Unit relative to the currently working Optical Termination (OLT0) and the ranging information of the single predetermined Optical Network Unit (ONU1) relative to the protection Optical Line Termination (OLT1).

## Description

The present invention relates to a method for securing the access provided by a type B Passive Optical Network (PON) to a high rate optical networking infrastructure and a system for implementing such a method.

Passive Optical Networks (PON) are well known as being one among the two architectures of the access part of optical networks.

According to the Passive Optical Network (PON) architecture, also called Point to Multipoint architecture, a conventional non protected Passive Optical Network (PON) comprises a working Optical Line Termination (OLT) connected to a working switch belonging to a high rate optical networking infrastructure and at least one working optical splitter wherein the working optical splitter is upwardly connected to one working Optical Line Termination (OLT) through a working dedicated fibre.

The Passive Optical Network also comprises at least a group of several working user terminals, also called working Optical Network Units (ONUs) connected to the working Optical Line termination (OLT) by sharing the same fibre from the working Optical Line Termination (OLT) to the splitter.

In a type C protection architecture as defined in ITU-T recommendation G984.3, the Passive Optical Network is protected by providing redundant components called protection components to all the working components of the initially unprotected Passive Optical Network.

In the type C protection architecture, the working Optical Line Termination (OLT), the working fibre from the working Optical Line Termination (OLT) to the working splitter, the working splitter, the working fibres from the working splitter to the working Optical Network Units (ONUs) are respectively protected by a redundant Optical Line Termination (OLT), a redundant protection fibre from the protection Optical Line Termination (OLT) to the protection splitter, a redundant protection splitter, redundant protection fibres from the protection splitter to the protection Optical Network Units (ONUs).

In order to diminish the complexity and the cost of the type C architecture an alternate architecture called type B architecture is proposed in the ITU-T recommendation G984.3, providing that statistically the far most probable failure is the cutting by an excavator of the longest fibre which extends between the working Optical Line Termination (OLT) and the working splitter.

In the type B architecture, only the working link consisting of the working fibre between the working splitter and the working Optical Line Termination) and the working Optical Line Termination is protected by providing a redundant link consisting of a redundant protection Optical Line Termination (OLT) and a redundant protection fibre between the working splitter and the protection Optical Line Termination (OLT).

For each Optical Line Termination only one different respective fibre is shared by the Optical Network Units both for uplink (from the working splitter to the working Optical Line Termination or the protection Optical Line Termination) and downlink (from the working Optical Line Termination or the protection Optical Line Termination to the working splitter), uplink and downlink data are transmitted simultaneously using two distinct wavelengths λ1, λ2 of the laser. Such a downlink/uplink access scheme is referred as wavelength duplex access.

In the uplink direction, a time slot is allocated repeatedly to each Optical Network Unit, wherein transmission of data is enabled.

Time slots are configured into a frame in such a way to avoid simultaneous transmission which could collide. Such an uplink access scheme from the Optical Network Units to the Optical Line Termination is called a Time Division Multiplexing Access (TDMA).

In the type B architecture, a unique light wavelength, here λ1 is used in uplink both for the working fibre between the splitter and the working Optical Line Termination and for the protection fibre between the splitter and the protection Optical Line Termination.

In the type B architecture, a unique light wavelength, here λ2 is used in downlink both for the working fibre between the splitter and the working Optical Line Termination and for the protection fibre between the splitter and the protection Optical Line Termination.

In the type B architecture, since both working and protection Optical Line Terminations are connected to same splitter and use the same wavelength λ2 in downlink, they cannot emit data concurrently whereas they are able to receive data concurrently.

In case of a working fibre failure between the splitter and the currently working Optical Line Termination (OLT), the protection Optical Line Termination (OLT) needs to take over very quickly in less than 50 ms the control of the Passive Optical Network (PON) access as a new working Optical Line Termination.

The technical problem is to a find a protection and preparation method efficient in term of energy saving of the protection Optical Line Termination (OLT) hardware while being in a protection state that enables the protection Optical Line Termination (OLT) to quickly take over the control of Passive Optical Network (PON) access by becoming a new working Optical Line termination.

The invention accordingly relates to a method for preparing a take over of an access control of a type B protected Passive Optical Network by a protection Optical Line Terminal,
the type B Passive Optical Network comprising a first Optical Line Termination and a second optical Line Termination, previously and respectively set as a currently working Optical Line Termination and a protection Optical Line Termination, a splitter upwardly connected to the working Optical Line Termination through a first optical fibre and to the protection Optical Line Termination through a second optical fibre, a set of Optical Network Units upwardly connected to the splitter through dedicated optical fibres,
the type B protected Passive Optical Network sharing a same first wavelength in downlink from any Optical Line Termination and to any Optical Network Unit and a same second wavelength in uplink from any Optical Network Unit to any Optical Line Termination, the first and second wavelengths being different,
comprising the steps consisting of:
ranging by the currently working Optical Line Termination each Optical Network Unit and storing the ranging information obtained for each Optical Network Unit relative to the currently working Optical Line Termination,
allocating by the currently working Optical Line Termination transmission resources for a TDMA uplink access to be used by the Optical Network Units and prescribing time of transmissions in the TDMA uplink for the slots to be used by the Optical Network Units according to the allocated transmission resources and the ranging information for each Optical Network Unit relative to the currently working Optical Line Terminal,
**characterized in that** it comprises the steps consisting of:
sending from the currently working Optical Line Terminal to the protection Optical Line Terminal a ranging enabling message defining a ranging gap by a gap delay and a gap duration, the gap delay being the time to wait upon reception of the ranging enabling message to range one single selected Optical Network Unit by the protection Optical Line Termination,
sending from the currently working Optical Line Termination to the protection Optical Line Termination signalling messages containing the ranging information of each Optical Network Unit relative to the currently working Optical Line Terminal,
listening by the protection Optical Line Termination the signalling messages sent by the currently working Optical Line Termination,
ranging the selected Optical Network Unit by the protection Optical Line Termination during the ranging gap while the currently working Optical Network Unit and the remaining Optical Network Units are kept silent,
determining the ranging information of each Optical Network Unit relative to the protection Optical Network Unit from the ranging information of each Optical Network Unit relative to the currently working Optical Termination and the single ranging information of the predetermined Optical Network Unit relative to the protection Optical Line Termination.

According to particular embodiments, the method for preparing a take over comprises one or more of the following characteristics:
- the type B Passive Optical Network comprises a communication data link, established between the currently working Optical Line Termination and the protection Optical Line Termination, and through which signalling messages containing the ranging information of each Optical Network Unit relative to the currently working Optical Line Termination or the ranging enabling message are sent by the currently working Optical Line Termination;
- it comprises the further steps consisting of:
   sending from the currently working Optical Line Termination to the protection Optical Line Termination signalling messages containing updated ranging information of all the Optical Network Units relative to the currently working Optical Termination after a connection of a new Optical Network Unit or a removal of a connected Optical Network Unit or any change of ranging information comparatively to the ranging information exchanged previously,
   determining updated ranging information of all the Optical Network Units relative to the protection Optical Network Unit from the updated ranging information of all the Optical Network Units relative to the currently working Optical Termination and the ranging information of the predetermined Optical Network Unit relative to the protection Optical Line Terminal;
- only the information changes contained in the updated ranging information are sent to the protection Optical Line Termination;
- the currently working Optical Line Termination and the remaining Optical Network Units are kept silent during a sleeping window configured so that no collision occurs during the ranging gap;
- the currently working Optical Line Terminal sends regularly to the protection Optical Line Termination signalling messages according to a sequence of predetermined transmission time intervals, two consecutive transmission time intervals being separated by a maximum duration representative of the response time to detect a failure of the Passive Optical Network;
- the protection Optical Line Termination receives the signalling messages regularly sent from the currently Optical Line Termination according to a sequence of predetermined signalling reception time intervals, the dates of signalling reception time intervals being determined according to a predetermined time schedule;
- the date of a signalling reception time interval is indicated in the previous signalling message received in the previous signalling reception time interval;
- the protection Optical Line Termination is sleeping between two consecutive signalling reception time intervals;
- the communication data link established between the currently working Optical Line Termination and the protection Optical Line Termination is a communication link using the optical fibres of the Passive Optical Network and a master echoing Optical Network Unit serving as a communication relay between the currently working Optical Line termination and the protection Optical Line Termination.

The invention also relates to a protection method of a type B Passive Optical Network, the type B Passive Optical Network comprising a first Optical Line Termination and a second optical Line Termination, previously and respectively set as a currently working Optical Line Termination and a protection Optical Line Termination, a splitter upwardly connected to the working Optical Line Termination through a first optical fibre and to the protection Optical Line Termination through a second optical fibre, a set of Optical Network Units upwardly connected to the splitter through dedicated optical fibres,
the type B protected Passive Optical Network sharing a same first wavelength in downlink from any Optical Line Terminal and to any Optical Network Unit and a same second wavelength in uplink from any Optical Network Unit to any Optical Line Terminal, the first and second wavelengths being different,
comprising the steps consisting of:
setting up the passive Optical network,
preparing a take over of an access control as defined in the above lines,
detecting a failure of the network,
in case of a detected failure, switching over the take over of the network access control by the protection Optical Line Terminal that becomes a new working Optical line terminal.

According to particular embodiments, the protection method comprises one or more of the following characteristics:
- the setting up step comprises a step for determining the status and the settings of the Optical Line Terminations, wherein
   for each Optical Line Termination,
   the Optical Line Termination is set in an undetermined status wherein the Optical Line Termination is passive and is able to listen only,
   in a following step, the Optical Line Termination during a listening period listens to all uplink traffic and signalling data sent from all Optical Network,
   if, in a testing step, traffic or signalling data is detected by the Optical Line Termination during the listening period, the Optical Line Termination is set as a slave protection Optical Line Termination in a step,
   if no traffic or signalling data has been detected during the listening period, the Optical Line Termination sends a first CENSUS message immediately after the listening period, requiring that all Optical Network Units must respond according to randomized emitting times to the CENSUS message even if the Optical Network Units have been already registered for one Optical Line Termination and must indicate in their respective response the address of the Optical Line Termination that has sent the CENSUS message,
   in a following testing step, if the given Optical Line Termination does not receive any message within a first timeout period, the step for determining the status continues by jumping to the step that sets the Optical Line Termination in an undetermined status,
   if the Optical Line Termination receives in the first timeout a traffic message or a first signalling message addressed to another Optical Line Termination, then the Optical Line Termination is set as a slave protection Optical Line Termination,
   if the Optical Line Termination does not receive a timeout a traffic message or a first signalling message addressed to another Optical Line Termination, the Optical Line Termination sends a second CENSUS message,
   then in a testing step, if the Optical Line Termination does not receive any message within a second timeout period, the step for determining the status continues by jumping to the step that sets the Optical Line Termination in an undetermined status,
   if the Optical Line Termination receives within the second timeout a message of traffic or a signalling message addressed to another Optical Line Termination, then the Optical Line Termination is set as a slave protection Optical Line Termination,
   if the Optical Line Termination did not receive within the second timeout a message of traffic or a signalling message addressed to another Optical Line Termination, setting the Optical Line Termination as a currently working Optical Line Termination;
- the detection step in the uplink a failure is detected by the protection Optical line Termination if the protection Optical Line Termination does not receive signalling messages sent regularly from the currently working Optical Line Termination and does not receive any uplink data traffic.

The invention also relates to a protected type B Passive optical network comprising
a first Optical Line Termination initially set as a currently working Optical Line Termination,
a second optical Line Termination initially set as a protection Optical Line Termination,
an asynchronous communication link established between the currently working Optical Line Termination and the protection Optical Line Termination,
a splitter upwardly connected to the first Optical Line Termination trough a first optical fibre and to the second Optical Line Termination through a second optical fibre,
a set of Optical Network Units upwardly connected to the splitter through dedicated optical fibres,
the type B protected Passive Optical Network sharing a same first wavelength in downlink from any Optical Line Termination and to any Optical Network Unit and a same second wavelength in uplink from any Optical Network Unit to any Optical Line Termination, the first and second wavelengths being different,
the currently working Optical Line Termination being able to range each Optical Network Unit to obtain ranging information of each Optical Network Unit relative to the currently working Optical Line Termination, to allocate transmission resources for a TDMA uplink access to be used by the Optical Network Units and able to prescribe time of transmissions in the TDMA uplink for the slots to be used by the Optical Network Units according to the allocated transmission resources and the ranging information of each Optical Network Unit relative to the currently working Optical Line Termination,
the protection Optical Line Termination being able to range all optical Network Units to obtain ranging information of each Optical Network Unit relative to the second Optical Line Termination, to allocate transmission resources for a TDMA uplink access to be used by the Optical Network Units and able to prescribe time of transmissions in the TDMA uplink for the slots to be used by the Optical Network Units according to the allocated transmission resources and the ranging information of each Optical Network Unit relative to the second Optical Line Termination,
**characterized in that**
the currently working Optical Line Termination comprises a protection management unit able, as a protection management unit of a currently working Optical Line Termination,
to send a ranging enabling message defining a ranging gap by a gap delay and a gap duration, the gap delay being the time to wait upon reception of the signalling ranging enabling message by a protection Optical Line Termination to range one single selected Optical Network Unit,
to send signalling messages containing the ranging information of each Optical Network Unit relative to the currently working Optical Line Termination and in that
the protection Optical Line Termination comprises a protection management unit able, as a protection management unit of a protection Optical Line Termination,
to listen the signalling messages sent by the currently working Optical Line Termination through the data communication link, and to range a single selected Optical Network Unit during the ranging gap while the currently working Optical Line Termination and the remaining Optical Network Units are kept silent,
to determine the ranging information of each Optical Network Unit relative to the protection Optical Line Termination from the ranging information of all the Optical Network Units relative to the currently working Optical Termination and the ranging information of the single selected Optical Network Unit relative to the protection Optical Line Termination.

According to particular embodiments, the Passive Optical Network comprises one or more of the following characteristics:
- the communication link is a communication link between the Optical line Terminations and through a master echoing Optical Network Unit serving as a communication relay between the currently working Optical Line termination and the protection Optical Line Termination.

A better understanding of the invention will be facilitated by reading the following description, which is given solely by way of examples and with reference to drawings, in which:
- Figure 1 is an architectural view of a simplified type B Passive Optical Network according to the invention wherein is implemented the method for protecting the Passive Optical Network, in particular a preparation step for preparing a take over of the access control of the PON,
- Figure 2 is a flow chart of a protection method for protecting the type B Passive Optical Network of Figure 1,
- Figure 3 is detailed flow chart of a network set up step as a step of the protection method of Figure 2,
- Figure 4 is a detailed flow chart of a preparation step as a step of the protection method of Figure 2 for preparing the take over the access control implemented in the architecture of the figure 1,
- Figure 5 is a view of an exemplified time-space chart representing signalling exchange between a currently working Optical Line Termination (OLT), a protection Optical Line Termination (OLT), an echoing master Optical Network Unit (E-ONU) and the remaining Optical Network units during a nominal operation of the Passive Optical Network including steps of the protection method described shown in Figure 2,

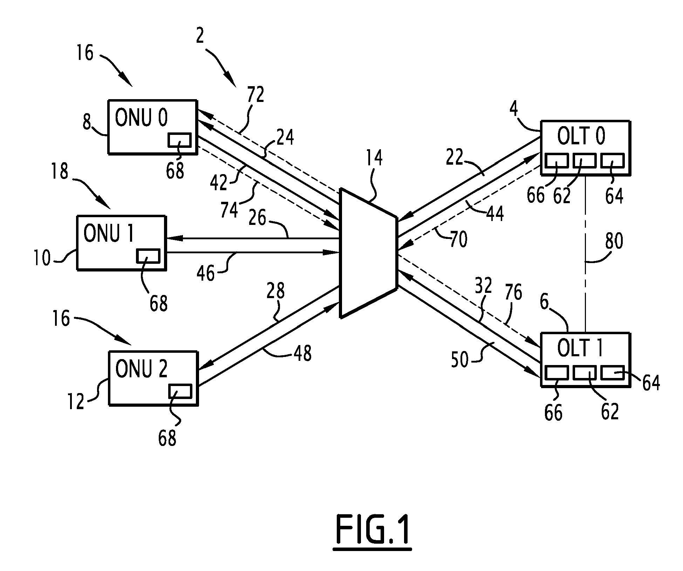

According to figure 1, a protected type B Passive Optical Network 2 also referred as type B Passive Optical Network comprises a first Optical Termination 4, a second Optical Line Termination 6 and several Optical Network Units 8, 10, 12 connected to the Optical Line Terminations 4, 6 through a same splitter 14.

The number of Optical Line Terminations 4, 6 and Optical Network Units 8, 10, 12 connected together is for sake of simplicity respectively equal to two and three.

In the example of figure 1, the first Optical Line Termination 4 referred as OLT0 that will be assumed to fulfil the conditions to be initially set as a working Optical Line Termination is connected to the shared splitter 14 by an optical fibre not shown and the Optical Network Units 8, 10, 12, also denoted respectively ONU0, ONU1 and ONU2, connected to the shared splitter 14 through a respective different optical fibre not shown.

The second Optical Line Termination 6 referred as OLT1 that will be assumed to fulfil the conditions to be initially set as a protection Optical Line Termination is connected to the shared splitter 14 by an optical fibre not shown and the Optical Network Units 8, 10, 12, also denoted respectively ONU0, ONU1 and ONU2, connected to the shared splitter 14 through a respective different optical fibre not shown.

Each Optical Network Unit 8, 10, 12 shares a same first wavelength λ1 in a downlink shown in full lines comprising two elementary downlinks 22, 24 in series respective to ONU0 (from OLT0 to splitter 14 and from splitter 14 to ONU0), two downlinks 22, 26 in series respective to ONU1 (from OLT0 to splitter 14 and from splitter 14 to ONU1) and two downlinks 22, 28 in series respective to ONU2 (from OLT0 to splitter 14 and from splitter 14 to ONU2) .

Each Optical Network Unit 8, 10, 12 shares a same first wavelength λ1 in a downlink shown in full lines comprising two elementary downlinks 32, 24 in series respective to ONU0 (from OLT1 to splitter 14 and from splitter 14 to ONU0), two downlinks 32, 26 in series respective to ONU1 (from OLT1 to splitter 14 and from splitter 14 to ONU1) and two downlinks 32, 28 in series respective to ONU2 (from OLT0 to splitter 14 and from splitter 14 to ONU2) .

Each Optical Network Unit 8, 10, 12 share a same uplink wavelength λ2 in a uplink comprising two uplinks 42, 44 in series from ONU0 to OLT0 through the splitter 14, two uplinks 46, 44 in series from ONU1 to OLT0 through the splitter 14, two uplinks 48, 44 in series from ONU2 to OLT0 through the splitter 14, two uplinks 42, 50 in series from ONU0 to OLT1 through the splitter 14, two uplinks 46, 50 in series from ONU1 to OLT1 through the splitter 14, two uplinks 48, 50 in series from ONU2 to OLT1 through the splitter 14.

The uplink wavelength λ2 is different from the first λ1 used in the downlink.

In the Passive Optical Network architecture of figure 1, for an Optical Line Termination set as a currently working, here OLT0, since only one fibre is shared by the Optical Network Units 8, 10, 12 both for Optical Line Termination uplink (from the splitter 14 to Optical Line Termination OLT0) and Optical Line Termination downlink (from Optical Line Termination OLT0 to the splitter 14), uplink and downlink data are transmitted without collisions even simultaneously by using the two distinct wavelengths of the laser, λ1 and λ2.

Such a downlink/uplink access scheme is referred as wavelength duplex access.

Since the wavelength λ2 is the same for uplink, all the Optical Line Terminations 4, 6 are able to listen to all the transmitted packets from all Optical Network Units 8, 10, 12.

Therefore, any Optical Line Termination among OLT0 and OLT1 is therefore able to listen to all the Optical Network Units 8, 10, 12.

Conversely, since only one common wavelength λ1 is used in downlink both by the two Optical Line Terminations OLT0 and OLT1, only one Optical Line Termination, for example OLT0 is allowed to emit data while the remaining Optical Line Terminations, here OLT1, is kept silent in order to avoid data collision in downlink.

In the uplink direction, a time slot is allocated repeatedly to each Optical Network Unit.

Time slots are configured into a frame in such a way to avoid simultaneous transmission which could collide. Such an uplink access scheme from the user terminals to the OLT is called a Time Division Multiplexing Access (TDMA).

The first Optical Line Termination 4, OLT0 and the second optical line Termination 6 OLT1 comprise respectively a first dynamic transmission resources allocation unit 62 and a second dynamic transmission resources allocation unit 62, each dynamic transmission resources allocation unit 62 also referred to DBA unit (Dynamic Bandwidth Allocation unit) being able to allocate transmission resources for the TDMA uplink access to be used by the Network Units 8, 10, 12.

The first Optical Line Termination 4 OLT0, respectively the second Optical Line Termination 6 OLT1, also comprise a first multiple point control unit, respectively a second multiple point control unit 64 able to prescribe time of transmissions in the TDMA uplink for the slots to be used by the Optical Network Units 8, 10, 12, according to the allocated transmission resources and computed round trip propagation delays between the first OLT0, respectively the second Optical Line Termination OLT1 and the Optical Network Units 8, 10, 12.

Each OLT 4, 6 comprises Optical Line Terminal means 66 for managing protection especially preparing take over of access control, able firstly as a discovering Optical Line Termination to determine a master echoing Optical Network Unit referred as E-OLT among all the Optical Network Units as the first registered and declared Optical Network Unit by the currently working Optical Line Termination, here OLT0 also referenced as the master Optical Line Termination, and able to manage PON protection process as secondly a master or working Optical Line Termination and as thirdly a slave or protection Optical Line Termination.

Each Optical Network Unit 8, 10, 12 comprises Optical Network Unit means 68 for preparing take over, as a master echoing Optical Network Unit able at a given local time relative to the master Optical Line Termination to send to the other Optical line Terminations referenced as slave Optical Line Terminations an echoed synchronization message containing synchronization information related to the corresponding master Optical Line Termination.

The Optical Line Terminal means 66 of each Optical Line Termination 4, 6 have an Optical Line Termination process for coordinating the uplink TDMA access.

The Optical Network Unit means 68 of each Optical Network Unit 8, 10, 12 have an Optical Network Unit process for coordinating the uplink TDMA access.

Here, it is assumed that OLT0 fulfil the conditions to be initially set as a master working Optical Line Termination whereas OLT1 fulfil conditions to be initially set as a slave protection Optical Line Termination.

A data communication link is established from OLT0 to OLT1 through a predetermined master echoing Optical network Unit acting as a communication relay, here ONU0. The communication link comprises successive data links 70 (downlink from OLT0 to splitter 14), 72 (downlink from splitter 14 to ONU0), 74 (uplink from ONU0 to splitter), 76 (from splitter 14 to OLT1).

In a variant, the data communication link 70, 72, 74, 76 is replaced by a communication link 80 that does not use the internal PON links. For instance, the communication link 80 uses communication links provided by the core infrastructure network.

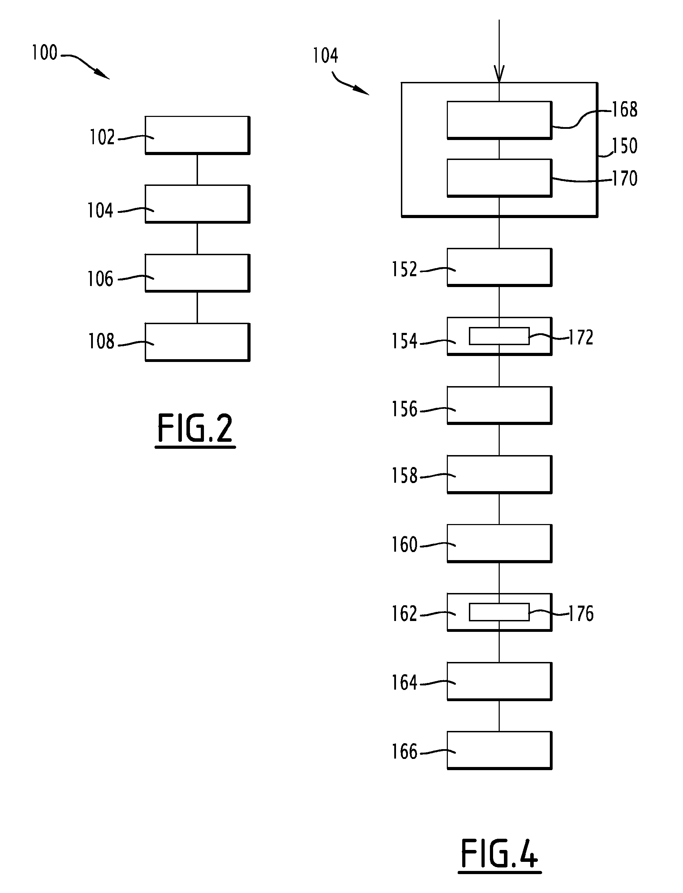

According to figure 2, a method 100 for protecting the type B Passive Optical Network 2 described in Figure 1 comprises a set of subsequent steps 102, 104, 106 and 108.

In a first network setup step 102, the Passive Optical network is set up in an initialization configuration.

In a following step 104, referred as a preparation and monitoring step, a possible take over of access control by a protection Optical Line Terminal is prepared and the Passive Optical Network is monitored by at least one protection Optical Line Termination to detect a possible failure either of the currently working Optical Line termination, either of the optical fibre between the splitter 14 and the currently working Optical Line Termination.

Then in a step 106 of detection, a possible failure of the currently working Optical Line Termination or the optical fibre before the splitter 14 and the currently working Optical Line Termination is searched by the protection Optical Line Termination OLT1. In case a failure is detected a switch over is decided by the protection Optical Line Termination that becomes the new working Optical Line Termination.

The detection is based on system parameters such as hold-off, delays and status such as links availability.

For example, in the uplink a failure is detected by the protection Optical line Termination OLT1, if the protection Optical Line Termination does not receive signalling messages sent regularly from the currently working Optical Line Terminal and does not see any uplink data traffic.

As another example, a failure is detected at some upper Ethernet level as described in the European patent application EP09305278 and reported by a feed back from upper Ethernet level equipment to the Optical Line Terminations.

In the downlink, as an example a failure is detected by an Optical Network Unit with an Ethernet device as described in the same above cited patent application.

Subsequently, in a step 108 of switch over, a take over of PON access control is carried out by the protection Optical Line Terminal which become a new working optical Line Termination.

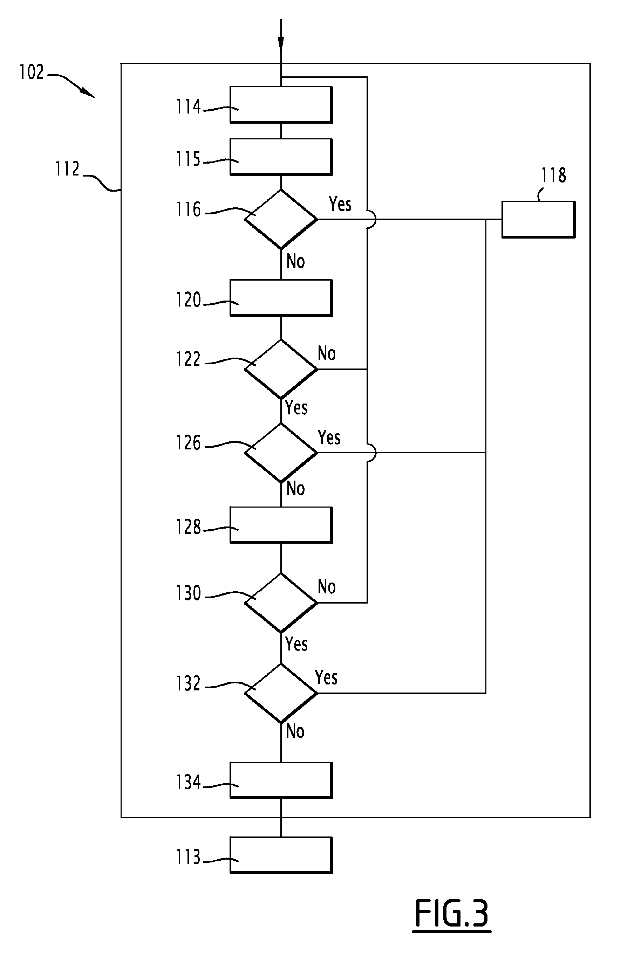

According to Figure 3, the network set up step 102 comprises two subsequent steps 112 and 113.

It is assumed that before the start of the step 102 all Optical Line Terminations are in a same status referred to "undetermined status" wherein each Optical Line Termination are passive and can only listen. OLT0 and OLT1 do not know yet which active status among the master working Optical Line Termination status and the slave protection Optical Line Termination they will acquire.

In the step 112 also referred as to step of status determination and Optical Line Terminations current settings, for each Optical Line Termination, a status and a corresponding setting is determined in terms of, either a master and a currently working Optical Line Termination, either a slave and a protection Optical Line Termination, either an Optical Line Termination set in an undetermined status.

The step 112 comprises the set of steps 114, 116, 118, 120, 122, 124, 126, 128, 130.

For each Optical Line Termination among OLT0 and OLT1 the step 114 is carried out. In step 114, a given Optical Line Termination is set or kept in the undetermined status.

In the following step 115 each Optical Line Termination OLT0, OLT1 is listening during a listening period to all uplink traffic and signalling data sent from all Optical Network Units 8, 10, 12.

It is assumed that OLT0 will fulfil the conditions to become a master working Optical Line Termination and that OLT1 will fulfil the conditions to become a protection Optical Line Termination.

If traffic or signalling data is detected in the testing step 116 by an Optical Line Termination during the listening period, the Optical line Termination becomes a slave and is set as a slave protection Optical Line Termination in the step 118.

Here OLT0 does not detect such traffic or signalling but OLT1 may have done such detection.

If no traffic or signalling data has been detected during the listening period, by the Optical Line Termination in a step 120, the Optical Line Termination sends a first CENSUS message immediately after the listening period.

The CENSUS message is similar to a discovery message used in the step 113 during the establishment of normal operation wherein all the Optical Network Units are discovered.

However, the CENSUS message differs from a discovery message in that all Optical Network Units must respond to a CENSUS message even if the Optical Network Units have been already registered for one Optical Line Termination.

In addition, when an Optical Network Unit receives a CENSUS message, it must respond by indicating in its response the address of the Optical Line Termination that has sent the CENSUS message.

In the testing step 122, if the Optical Line Termination does not receive any message within a first timeout period, it cannot decide to become a working or a protection Optical Line Termination and then it continues to listen and stays passive by executing again the step 114.

Here OLT0 and OLT1 are assumed to have received a message.

In the step 126, if the Optical Line Termination receives in the first timeout a message of traffic or a first signalling message addressed to another Optical Line Termination, then the Optical Line Termination becomes a slave and is set as a slave protection Optical Line Termination in the step 118.

Here OLT0 did not receive such a message but OLT1 may have received it.

In the step 126, if the Optical Line Termination did not receive such a message this means that the Optical Line Termination receives at first only a response to its own CENSUS message before the first time out.

In this case, in a following step 128, the Optical Line Termination sends a second CENSUS message.

Then, in the testing step 130 similar to the step 122, if the Optical Line Termination does not receive any message within a second timeout period, it cannot decide to become a working or a protection Optical Line Termination and then it continues to listen and stays passive by executing again the step 114.

Here OLT0 and OLT1 are assumed to have received a message.

In the step 132, if the Optical Line Termination receives in the second timeout a message of traffic or a first signalling message addressed to another Optical Line Termination, then the Optical Line Termination becomes a slave and is set as a slave protection Optical Line Termination in the step 118.

Here OLT0 did not receive such a message but OLT1 has received it.

In the step 132, if the Optical Line Termination did not receive such a message this means that the Optical Line Termination receives at first only a response to its own second CENSUS message before the first time out.

Therefore, OLT0 received before the second time out only a response to its own second CENSUS message.

In a following step 134, OLT0 becomes a master working Optical Line Termination.

At the end of step 112, all the Optical Line Terminations have acquired a status.

Here OLT0 by execution of step 134 is a working Optical Line Termination whereas OLT1 by execution of step 118 is a protection optical Line Termination.

With such a status and setting of master, respectively protection Optical Line Termination, determination step 112, it is ensured that an Optical Line Termination becomes the master of currently working Optical Line Termination of the Passive Optical Network without disturbing an already existing working Optical Line Termination.

It is thus avoided a problem of a possible wrong master Optical Line Termination determination, in the case the line between the splitter and an already existing protection Optical Line Termination was cut before or during the first listening period and repaired just before sending of the first CENSUS sending by OLT1.

It should be noted that in order to avoid collisions in uplink reception by the Optical Line Terminations of the response messages sent by the Optical Network Units to the CENSUS messages, the corresponding emitting times of the Optical Line Terminations are randomized according conventional algorithms.

Following the step 112, in the step 113 normal operation of the network is established since OLT0 has been determined and set as the master working Optical Line Termination. During this step 113, the Optical Network Units 8, 10, 12 are discovered through discovery messages, registered and ranged by the currently working Optical Line Termination OLT0.

During the step 113, at a core network infrastructure interface not illustrated in Figure 1, both Optical Line Terminations 4 and 6, the first Optical Line Termination 4 (OLT0) and the second Optical Line Termination 6 (OLT1), are fed by a same downlink data stream and only the working Optical Line Termination relays the data to the Optical Network Units 8, 10, 12.

Both uplink streams generated from the Optical Network Units are merged at splitter level but only the working Optical Line Terminal relays data to the core network.

According to Figure 4, the preparation step 104 for preparing a take over of the Passive Optical Network access control comprises a set of steps 150, 152, 154, 156, 158, 160, 162, 164, 166, 168, 170, 172, 176.

The master currently working Optical Line Termination (OLT0) sends regularly in steps 150, 172, 174, 176 signalling messages called here ECHO messages since they are relayed by a predetermined echoing master Optical Network Unit 8, here ONU0.

These ECHO messages are sent according to a sequence of predetermined transmission time intervals through the echoing master Optical Network Unit, ONU0, two consecutive transmission time intervals being separated by a maximum duration providing the response time to detect a Passive Optical Network failure.

The echoing master Optical Network Unit, ONU0 sends back the ECHO messages uplink to all Optical Line Terminals, 4, 6 that are awaken..

Depending on different events, the ECHO messages may contain several pieces of information that are following ones:
- a signalling ranging enabling message, defining a ranging gap, by a gap delay and a gap duration, the gap delay being the time to wait upon reception of the signalling ranging enabling message to range one selected Optical Network Unit, here ONU1, by the protection Optical Line Termination OLT1, or a delay for the next ECHO reception,
- information of ranging measured by and relative to the working Optical Line Terminal OLT0 for each Optical Network Unit 8, 10, 12.
- the action to be taken for the next wake up : either a simple ECHO reception, or ranging and then an ECHO reception, which requires that a ranging gap is followed by an ECHO reception time interval.

The events are for example an initialization step of the Passive Optical Network, a switch over, a removal of an ONU, a new ONU adhering to the network, other causes of changes concerning ranging information.

The ECHO messages are classified according to two ECHO types called respectively "short ECHO" and "long ECHO".

The short ECHO is sent into one single frame that contains for example the date of the next ECHO reception time interval or the ranging enabling message setting the next ranging gap.

The long ECHO is either sent into one single frame or fragmented in several consecutive frames, and contains firstly information about all Optical Network Units 8, 10, 12, especially ranging information relative to the master currently working Optical Line Termination OLT0, and secondly the date of the next ECHO reception time interval or the ranging enabling message setting the next ranging gap.

Here, in the first step 150, the master working Optical Line Termination OLT0 which is under a normal operation consisting of sending and receiving the traffic data, sends a long ECHO message to the protection Optical Line Terminations, here OLT1, through the echoing master Optical Network Unit ONU0.

The step 150 is divided into the two steps 168 and 170.

In the step 168, the currently working Optical Line Terminal OLT0 sends to the protection Optical Line Terminal OLT1 a ranging enabling message defining the ranging gap by a gap delay and a gap duration, the gap delay being the time to wait upon reception of the signalling ranging enabling message to range one selected Optical Network Unit, for example ONU1, by the protection Optical Line Termination OLT1.

In the step 170, the currently working Optical Line Termination OLT0 sends to the protection Optical Line Termination OLT1 signalling messages containing the ranging information of all the Optical Network Units 8, 10, 12 relative to the currently working Optical Line Termination OLT0.

The step 150 is followed by the step 152 wherein the protection Optical Line Termination OLT1 listens to the long ECHO message sent in step 150.

In the subsequent step 154, the protection Optical Line Termination OLT1 decodes the ranging enabling message, sets its hardware in a sleeping mode corresponding to the highest level of power supply saving and triggers a time counter for counting the gap delay until the next wakeup of the Optical Line Termination OLT1.

During the sleeping mode of step 154, the master optical Line Termination OLT0 which is normally working by receiving and sending traffic data sends a short ECHO message to the protection Optical Line Termination OLT1 through the echoing master Optical Network Unit ONU0.

The ECHO message will be sent by the echoing master Optical Network Unit ONU0 at a time defined so that the ECHO message will be received by the protection Optical Line Termination OLT1 after the ranging gap.

During the sleeping mode of OLT1 in step 154, the master working Optical Line Termination OLT0 may exchange traffic data with the Optical Network Units 8, 10, 12 under a normal operation.

In a subsequent step 156, after the gap delay has expired, the protection Optical Line Termination OLT1 ranges during the ranging gap a selected Optical Network Unit, here ONU1, during the ranging gap while the currently working Optical Network Unit OLT0 and the remaining Optical Network Units ONU0, ONU2 are kept silent during a sleeping window which is substantially concurrent to the ranging gap, so that collisions with the ONU1 ranging signalling messages are avoided in uplink, and collisions with the protection Optical Line Termination OLT1 are avoided in downlink.

To achieve the sleeping window, the master working Optical Line Termination OLT0 sends authorization messages to the Optical Network Units ONU0, ONU1, ONU2 at times configured so that the Optical Network Units ONU0, ONU1, ONU2 are not allowed to emit any data during the sleeping window except the data directly asked through a SCAN message by OLT1, providing that the reception of an emitting authorization message by an Optical Network Unit is required to enable the said Optical Network Unit to emit data.

In the subsequent step 158, the protection Optical Line Terminal OLT1 determines the ranging information of all the Optical Network Units 8, 10, 12 relative to the protection Optical Network Unit OLT1 from the ranging information of all the Optical Network Units 8, 10, 12 relative to the currently working Optical Termination OLT0 and the ranging information of the selected Optical Network Unit ONU1 relative to the protection Optical Line Terminal OLT1.

Here, the range of any given optical network unit relative to the protection Optical Line termination OLT1 is equal to the range of the same given optical network unit relative to the master Optical Line termination OLT0 corrected by the difference between the range of the selected Optical Network Unit ONU1 relative to OLT0 and the range of ONU1 relative to OLT0.

In the step 160 concurrent or following the step 158, the protection Optical Line Termination OLT1 listens to the short ECHO message sent in step 154.

After the step 160, in the step 162 the protection Optical Line Termination OLT1 is set in a sleeping mode while the currently working Optical Termination OLT0 is under normal operation.

During the step 162, the currently working Optical Termination OLT0 sends in a step 176 a short ECHO message.

In the subsequent step 164, the protection Optical Line Termination OLT1 is woken up at the date contained in the previous short ECHO message, listens to the ECHO message sent in step 176 and extracts the date of the next ECHO reception time interval.

In a subsequent step 166, the protection Optical Line Termination OLT1 triggers a time counter which is counts until the date of the next ECHO reception time interval or ranging gap at which OLT1 is woken up.

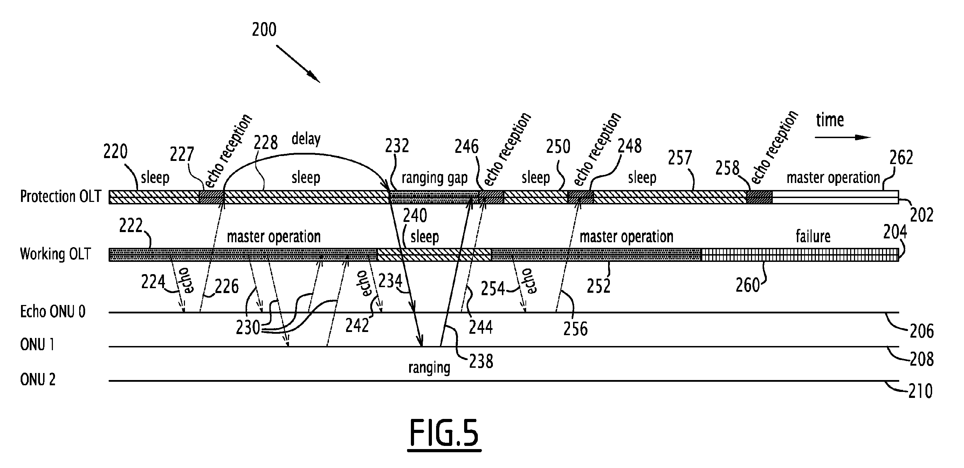

According to Figure 5, a time-space chart 200 represents signalling exchange between the protection Optical Line Termination OLT1 at level 202, the currently working Optical Line Termination OLT0 at level 204, the echoing master Optical Network Unit ONU0 at level 206, remaining Optical Network units ONU1, ONU2 at respective level 208, 210 during a nominal operation of the Passive Optical Network 2 in a typical protection process.

The protection process 200, illustrated here as an example, comprises the preparing step 104 of the take over as described in Figure 3, the detection of a network failure according to step 106 and a switch over 108 by the protection Optical Line Termination OLT1.

The network is already set with a master currently working Optical Line Termination 4 as OLT0 and a protection Optical Line Termination 6 as OLT1.

At level 202, the protection Optical Line Termination OLT1 is sleeping in a sleeping interval 220.

Concurrently, the master currently working Optical Line Termination OLT0 sends during a master operation interval 222, a long ECHO message through the signalling messages 224, 226 using the echoing master Optical Network Unit ONU0 as a communication relay.

Upon reception of the long ECHO message in an ECHO reception time interval 227, the protection Optical Line Termination OLT1 at level 202 triggers the time counting of the ranging gap delay and is set in the sleeping mode during a sleeping interval 228.

During the sleeping interval 228, the master currently working Optical Line Termination OLT0 exchanges traffic and signalling data messages 230 with some Optical Network units, here between OLT0 and the Optical Network Units ONU0 and ONU1.

After expiration of the ranging gap delay and during a ranging gap 232, a conventional step of ranging the Optical Network Unit ONU1 is executed by sending a SCAN message 234 from OLT1 to the selected Optical Network Unit ONU1, by sending a response to the SCAN message from the selected ONU1 to OLT1. During this ranging step, the master optical Line Termination OLT0 and the remaining Optical Network units ONU0, ONU2 are kept silent in a sleeping window 240 configured so that no collision occurs in uplink between and downlink during the ranging gap 232.

To implement the sleeping window 240, the master working Optical Line Termination OLT0 avoided sending emitting authorization messages to ONU0 and ONU2 at times configured so that ONU0 and ONU2 are kept silent during the sleeping window 240.

At an appropriate time which can be previous to the sleeping window 240, the master working Optical Line Termination OLT0 sent an ECHO message 244 to the protection Optical Line Termination through the echoing master Optical Network Unit ONU0. The ECHO message 244 is sent by the echoing master Optical Network Unit ONU0 at a time defined so that the ECHO message is received by the protection Optical Line Termination OLT1 after the ranging gap. 232 in an ECHO reception time interval 246. The ECHO message 244 contains here the date of a next ECHO reception time interval 248 but it may also contain the date of a next ranging gap.

The ECHO reception time interval 246 is followed by a sleeping time interval 250 during which the master working Optical Line Termination OLT0 is under normal operation in a time interval 252.

During the time interval 252, the master working Optical Line Termination OLT0 has sent a short ECHO message 254 relayed by the hop 256 at a time configured so that the ECHO message 254 is received in the ECHO reception time interval 248, the Optical Line Termination OLT1 being awaken at this time.

The ECHO message 254 relayed by the hop 256 received in the reception time interval 248 contains the date of the next wake up of OLT1 namely the date of a next ECHO reception interval 258. After receiving the date of the next wakeup the protection Optical Line Termination has been set in sleeping mode in the sleeping interval 257.

During the sleeping interval 257, a permanent failure at master Optical Line Termination OLT0 level 204 occurs and stays for an interval 260 of unknown duration.

The failure prevents new ECHO messages but also data traffic to be received by the protection Optical Line Termination OLT1. When the protection Optical Line Termination OLT1 is woken up it detects a failure and since it is already prepared to switch over, within a very short delay, the protection Optical Line Termination OLT1 becomes the new master Optical Line Termination and takes over the access control of the network for a period of time 262.

In a variant ECHO messages are transmitted through a communication link different from a link using the optical fibres of the Passive Optical Network 2.

Provided that the ranging of all Optical Network Units is a time consuming task, particularly if the number of Optical Network Units is important, for example equal to 2048, the method according to the invention enables a quick take over of the PON access control by the protection OLT.

With the protection method according to the invention, the protection Optical Line Termination is able to detect quickly a failure of the currently working Optical Line Termination.

Conversely, the working Optical Line Termination can detect a failure of a protection Optical Line Termination if a corresponding ranging step is not executed.

The proposed protection scheme avoids that the protection Optical Line Termination impacts significantly the traffic throughput of the network.

In addition, energy is saved by the protection Optical Line Termination.

## Claims

1. Method for preparing a take over of an access control of a type B protected Passive Optical Network (2) by a protection Optical Line Termination,
the type B Passive Optical Network (2) comprising a first Optical Line Termination (4) and a second optical Line Termination (6), previously and respectively set as a currently working Optical Line Termination (OLT0) and a protection Optical Line Termination (OLT1), a splitter (14) upwardly connected to the working Optical Line Termination (OLT0) through a first optical fibre and to the protection Optical Line Termination (OLT1) through a second optical fibre, a set of Optical Network Units (8, 10, 12) upwardly connected to the splitter (14) through dedicated optical fibres,
the type B protected Passive Optical Network (2) sharing a same first wavelength (λ1) in downlink from any Optical Line Termination (4, 6) and to any Optical Network Unit (8, 10, 12) and a same second wavelength (λ2) in uplink from any Optical Network Unit (8, 10, 12) to any Optical Line Termination (4, 6), the first and second wavelengths (λ1, λ2) being different,
comprising the steps consisting of:
ranging by the currently working Optical Line Termination (OLT0) each Optical Network Unit (8, 10, 12) and storing the ranging information obtained for each Optical Network Unit (8, 10, 12) relative to the currently working Optical Line Termination (OLT0),
allocating by the currently working Optical Line Termination (OLT0) transmission resources for a TDMA uplink access to be used by the Optical Network Units (8, 10, 12) and prescribing time of transmissions in the TDMA uplink for the slots to be used by the Optical Network Units (8, 10, 12) according to the allocated transmission resources and the ranging information for each Optical Network Unit (8, 10, 12) relative to the currently working Optical Line Termination (OLT0),
**characterized in that** it comprises the steps consisting of:
sending from the currently working Optical Line Termination (OLT0) to the protection Optical Line Termination (OLT1) a ranging enabling message defining a ranging gap by a gap delay and a gap duration, the gap delay being the time to wait upon reception of the ranging enabling message to range one single selected Optical Network Unit (ONU1) by the protection Optical Line Termination (OLT1),
sending from the currently working Optical Line Termination (OLT0) to the protection Optical Line Termination (OLT1) signalling messages containing the ranging information of each Optical Network Unit (8, 10, 12) relative to the currently working Optical Line Termination (OLT0),
listening by the protection Optical Line Termination (OLT1) the signalling messages sent by the currently working Optical Line Termination (OLT0),
ranging the selected Optical Network Unit (ONU1) by the protection Optical Line Termination (OLT1) during the ranging gap while the currently working Optical Network Unit (OLT0) and the remaining Optical Network Units (ONU0, ONU2) are kept silent,
determining (158) the ranging information of each Optical Network Unit (8, 10, 12) relative to the protection Optical Network Unit (OLT1) from the ranging information of each Optical Network Unit (8, 10, 12) relative to the currently working Optical Termination (OLT0) and the single ranging information of the predetermined Optical Network Unit (ONUL) relative to the protection Optical Line Termination (OLT1).

2. Method for preparing a take over according to claim 1, **characterized in that** the type B Passive Optical Network (2) comprises a communication data link (80), established between the currently working Optical Line Termination (OLT0) and the protection Optical Line Termination (OLT1), and through which signalling messages containing the ranging information of each Optical Network Unit (8, 10, 12) relative to the currently working Optical Line Termination (OLT0) or the ranging enabling message are sent by the currently working Optical Line Termination (OLT0).

3. Method for preparing a take over according to any of claims 1 to 2, **characterized in that** it comprises the further steps consisting of:
sending from the currently working Optical Line Termination (OLT0) to the protection Optical Line Termination (OLT1) signalling messages containing updated ranging information of all the Optical Network Units (8, 10, 12) relative to the currently working Optical Termination (OLT0) after a connection of a new Optical Network Unit or a removal of a connected Optical Network Unit or any change of ranging information comparatively to the ranging information exchanged previously,
determining updated ranging information of all the Optical Network Units relative to the protection Optical Network Unit (OLT1) from the updated ranging information of all the Optical Network Units relative to the currently working Optical Termination (OLT0) and the ranging information of the predetermined Optical Network Unit (ONU1) relative to the protection Optical Line Termination (OLT1).

4. Method for preparing a take over according to any of claims 1 to 3, **characterized in that** only the information changes contained in the updated ranging information are sent to the protection Optical Line Termination (OLT1).

5. Method for preparing a take over according to any of claims 1 to 4, **characterized in that** the currently working Optical Line Termination (OLT0) and the remaining Optical Network Units (ONU0, ONU2) are kept silent during a sleeping window configured so that no collision occurs during the ranging gap.

6. Method for preparing a take over according to any of claims 1 to 5, **characterized in that** the currently working Optical Line Termination (OLT0) sends regularly (150, 172, 174, 176) to the protection Optical Line Termination (OLT1) signalling messages according to a sequence of predetermined transmission time intervals, two consecutive transmission time intervals being separated by a maximum duration representative of the response time to detect a failure of the Passive Optical Network.

7. Method for preparing a take over according to the claim 6, **characterized in that** the protection Optical Line Termination (OLT1) receives the signalling messages regularly sent from the currently Optical Line Termination (OLT0) according to a sequence of predetermined signalling reception time intervals, the dates of signalling reception time intervals being determined according to a predetermined time schedule.

8. Method for preparing a take over according to claim 7, **characterised in that** the date of a signalling reception time interval is indicated in the previous signalling message received in the previous signalling reception time interval.

9. Method for preparing a take over according to any of claims 7 to 8, **characterized in that** the protection Optical Line Termination (OLT1) is sleeping between two consecutive signalling reception time intervals.

10. Method for preparing a take over according to any claim 7, **characterized in that** the communication data link (80) established between the currently working Optical Line Termination (OLT0) and the protection Optical Line Terminal (OLT1) is a communication link using the optical fibres of the Passive Optical Network (2) and a master echoing Optical Network Unit (ONU0) serving as a communication relay between the currently working Optical Line termination (OLT0) and the protection Optical Line Termination (OLT1).

11. Method for protecting a type B Passive Optical Network (2), the type B Passive Optical Network (2) comprising a first Optical Line Termination (4) and a second optical Line Termination (6), previously and respectively set as a currently working Optical Line Termination (OLT0) and a protection Optical Line Termination (OLT1), a splitter (14) upwardly connected to the working Optical Line Termination (OLT0) through a first optical fibre and to the protection Optical Line Termination (OLT1) through a second optical fibre, a set of Optical Network Units (8, 10, 12) upwardly connected to the splitter (14) through dedicated optical fibres,
the type B protected Passive Optical Network (2) sharing a same first wavelength (λ1) in downlink from any Optical Line Termination (4, 6) and to any Optical Network Unit (8, 10, 12) and a same second wavelength (λ2) in uplink from any Optical Network Unit (8, 10, 12) to any Optical Line Termination (4, 6), the first and second wavelengths (λ1, λ2) being different,
comprising the steps consisting of:
setting up (102) the passive Optical network (2),
preparing (104) a take over of an access control as defined in claims 1 to 10,
detecting (106) a failure of the network (2),
in case of a detected failure, switching over (108) the take over of the network access control by the protection Optical Line Termination (OLT1) that becomes a new working Optical line termination.

12. Method for protecting a type B Passive Optical Network (2) according to claim 11, **characterized in that** the setting up step (102) comprises a step (112) for determining the status and the settings of the Optical Line Terminations, wherein
for each Optical Line Termination (4, 6),
in a step (114), the Optical Line Termination is set in an undetermined status wherein the Optical Line Termination is passive and is able to listen only,
in a following step (115), the Optical Line Termination during a listening period listens to all uplink traffic and signalling data sent from all Optical Network Units (8, 10, 12),
if, in a testing step (116), traffic or signalling data is detected by the Optical Line Termination during the listening period, the Optical Line Termination is set as a slave protection Optical Line Termination in a step (118),
if no traffic or signalling data has been detected during the listening period, the Optical Line Termination in a step (120) sends a first CENSUS message immediately after the listening period, requiring that all Optical Network Units must respond according to randomized emitting times to the CENSUS message even if the Optical Network Units have been already registered for one Optical Line Termination and must indicate in their respective response the address of the Optical Line Termination that has sent the CENSUS message,
in a following testing step (122), if the given Optical Line Termination does not receive any message within a first timeout period, the step (112) continues by jumping to step (114),
in a step (126), if the Optical Line Termination receives in the first timeout a traffic message or a first signalling message addressed to another Optical Line Termination, then the Optical Line Termination is set as a slave protection Optical Line Termination, in the step (118).
In the step (126), if the Optical Line Termination does not receive a timeout a traffic message or a first signalling message addressed to another Optical Line Termination, Optical Line Termination sends in a step (128) a second CENSUS message,
then in a testing step (130), if the Optical Line Termination does not receive any message within a second timeout period, the step (112) continues by jumping to step (114),
in a step (132), if the Optical Line Termination receives within the second timeout a message of traffic or a signalling message addressed to another Optical Line Termination, then the Optical Line Termination is set as a slave protection Optical Line Termination, in the step (118)
in the step (132), if the Optical Line Termination did not receive within the second timeout a message of traffic or a signalling message addressed to another Optical Line Termination, in a step (134) setting the Optical Line Termination as a currently working Optical Line Termination.

13. Method for protecting a type B Passive Optical Network (2) according to any of claims 11 to 12, **characterized in that** in the detection step (116) in the uplink a failure is detected by the protection Optical line Termination (OLT1) if the protection Optical Line Termination (OLT1) does not receive signalling messages sent regularly from the currently working Optical Line Termination and does not receive any uplink data traffic.

14. Protected type B Passive optical network (PON) comprising
a first Optical Line Termination (4) initially set as a currently working Optical Line Termination (OLT0),
a second optical Line Termination (6) initially set as a protection Optical Line Termination (OLT1),
a communication link (80) established between the currently working Optical Line Termination (OLT0) and the protection Optical Line Termination (OLT1),
a splitter (14) upwardly connected to the first Optical Line Termination (4) through a first optical fibre and to the second Optical Line Termination (6) through a second optical fibre,
a set of Optical Network Units (8, 10, 12) upwardly connected to the splitter (14) through dedicated optical fibres,
the type B protected Passive Optical Network (2) sharing a same first wavelength (λ1) in downlink from any Optical Line Termination (4, 6) and to any Optical Network Unit (8, 10, 12) and a same second wavelength (λ2) in uplink from any Optical Network Unit to any Optical Line Termination (4, 6), the first and second wavelengths (λ1, λ2) being different,
the currently working Optical Line Termination (OLT0) being able to range each Optical Network Unit (8, 10, 12) to obtain ranging information of each Optical Network Unit (8, 10, 12) relative to the currently working Optical Line Termination (OLT0), to allocate transmission resources for a TDMA uplink access to be used by the Optical Network Units (8, 12) and able to prescribe time of transmissions in the TDMA uplink for the slots to be used by the Optical Network Units (8, 12) according to the allocated transmission resources and the ranging information of each Optical Network Unit (8, 10, 12) relative to the currently working Optical Line Termination (OLT0),
the protection Optical Line Termination (OLT1) being able to range all optical Network Unit (8, 10, 12) to obtain ranging information of each Optical Network Unit (8, 10, 12) relative to the second Optical Line Termination (4), to allocate transmission resources for a TDMA uplink access to be used by the Optical Network Units and able to prescribe time of transmissions in the TDMA uplink for the slots to be used by the Optical Network Units (10) according to the allocated transmission resources and the ranging information of each Optical Network Unit (8, 10, 12) relative to the second Optical Line Termination (4),
**characterized in that**
the currently working Optical Line Termination (OLT0) comprises a protection management unit (66) able, as a protection management unit of a currently working Optical Line Termination,
to send a ranging enabling message defining a ranging gap by a gap delay and a gap duration, the gap delay being the time to wait upon reception of the signalling ranging enabling message by a protection Optical Line Termination to range one single selected Optical Network Unit,
to send signalling messages containing the ranging information of each Optical Network Unit (8, 10, 12) relative to the currently working Optical Line Termination (OLT0, and **in that**
the protection Optical Line Termination (OLT1) comprises a protection management unit (66) able, as a protection management unit of a protection Optical Line Termination,
to listen the signalling messages sent by the currently working Optical Line Termination through the data communication link (80), and to range a single selected Optical Network Unit (ONU1) during the ranging gap while the currently working Optical Line Termination (OLT0) and the remaining Optical Network Units (ONU0, ONU2) are kept silent,
to determine (158) the ranging information of each Optical Network Unit (8, 10, 12) relative to the protection Optical Line Termination (OLT1) from the ranging information of all the Optical Network Units (8, 10, 12) relative to the currently working Optical Termination (OLT0) and the ranging information of the single selected Optical Network Unit (ONU1) relative to the protection Optical Line Termination (OLT1).

15. Protected type B Passive optical network (PON) according to the claim 14, **characterized in that** the communication link (80) is a communication link between the Optical line Terminations (4) and (6) through a master echoing Optical Network Unit (ONU0) serving as a communication relay between the currently working Optical Line termination (OLT0) and the protection Optical Line Termination (OLT1).
